# EUROPÄISCHE PATENTSCHRIFT

(11) **EP 3 816 241 B1**
(45) Veröffentlichungstag und Bekanntmachung des Hinweises auf die Patenterteilung: **03.01.2024**
(21) Anmeldenummer: 20205822.8
(22) Anmeldetag: 05.11.2020
(51) Int. Cl.: C09D 5/18, C09D 133/04, C09K 21/10

(54) **FEUERHEMMENDER LACK UND HERSTELLUNGSVERFAHREN DAFÜR**
FIRE RETARDANT PAINT AND METHOD FOR PRODUCING THE SAME
PEINTURE IGNIFUGE ET PROCÉDÉ DE FABRICATION CORRESPONDANT

(30) Priorität: 04.11.2019 DE 102019129597
(43) Veröffentlichungstag der Anmeldung: 05.05.2021
(73) Patentinhaber: Binder, Semen, 92637 Weiden (DE); Alekseii, Tsapko, 02232 Kiev (UA)
(72) Erfinder: Binder, Semen, 92637 Weiden (DE); Alekseii, Tsapko, 02232 Kiev (UA)
(74) Vertreter: Lang, Christian

(56) Entgegenhaltungen:
- CN-A- 1 488 692
- CN-A- 104 559 489
- CN-A- 109 233 498
- RU-C2- 2 666 861

## Beschreibung

### GEBIET DER ERFINDUNG

Die vorliegende Erfindung betrifft eine Farbe für industrielle Beschichtungen und ein Herstellungsverfahren dafür, insbesondere eine feuerhemmende Lackfarbe, die zur Beschichtung von Metallkonstruktionen für den Brandschutz geeignet ist.

### STAND DER TECHNIK

Im Alltag spielt der Brandschutz eine wichtige Rolle, um die Sicherheit der Menschen zu verbessern. Zur Brandverhütung und / oder Verhinderung der Brandausbreitung wurden verschiedenste Materialien mit Brandschutzeigenschaften entwickelt, welche z.B. zur Beschichtung von Baustoffen konzipiert sind.

Beispielsweise beschreibt die Druckschrift DE 10 2005 041 522 B4 eine Farbe mit Brandschutzeigenschaften, welche zur Beschichtung einer Metalloberfläche eingesetzt werden kann. Diese Farbe mit Brandschutzeigenschaften beinhaltet einen Rohstoff zur Aufnahme von endothermen Partikeln, der einen Karbonschaumrohstoff aufweist, und ein metallätzendes Mittel.

Des Weiteren bilden feuerhemmende schäumende Formmassen, die auch als "Intumeszenzmittel" bezeichnet werden, eine wichtige bekannte Stoffgruppe, die zu Brandschutzzwecken eingesetzt wird. Bezugnehmend auf die Dokumente DE 27 04 274 C2 und EP 0 026 857 A2 zeichnen sich Intumeszenzmittel dadurch aus, dass sie eine gerüstbildende, eine katalysierende (säurebildende) und eine treibende (gasbildende) Komponente miteinander kombinieren, wobei die gerüstbildende Komponente unter pyrolytischen Bedingungen ein Kohlenstoffgerüst für den Schaum bildet, wobei die katalysierende und die treibende Komponente unter pyrolytischen Bedingungen zersetzt werden und es zur Schäumung kommt. Als gerüstbildende Komponente eignen sich beispielsweise Zuckerpolyole (wie Pentaerythrit), als katalysierende Komponente eignen sich Ammoniumphosphate und als treibende Komponente eignet sich beispielsweise Melamin. Dokument DE 27 04 274 C2 verweist jedoch auch auf die Problematik bei der Verwendung solcher Stoffe in feuerhemmenden Anstrichen, welche darin besteht, dass im Brandfall Schaumstrukturen mit vergleichsweise geringen Dicken und üblicherweise mangelhafter Festigkeit gebildet werden, wodurch die Brandschutzwirkung stark eingeschränkt ist.

Aus der Druckschrift DE 103 30 555 A1 bzw. EP 1 641 895 B1 ist eine spezielle Zusammensetzung einer weiterentwickelten feuerhemmenden schäumenden Masse bekannt, mit der ein vorteilhaftes Brandschutzverhalten gewährleistet wird, wobei als intumeszierende Komponente eine Kombination aus Cyanursäurederivaten (wie Melamin), Zuckerpolyolen (wie Pentaerythrit), Ammoniumpolyphosphat, Blähgraphit und Aluminiumhydroxid verwendet wird, wobei die intumeszierende Komponente in Verbindung mit einem verbundbildenden Träger bereitgestellt wird. Neben den typischen Bestandteilen von Intumeszenzmitteln, die als Gasbildner, Säurelieferant und Gerüstbildner fungieren, beinhaltet die intumeszierende Komponente somit auch Blähgraphit und Aluminiumhydroxid, wobei, wie in EP 1 641 895 B1 explizit erläutert ist, der Blähgraphit als Krustenbildner und -stabilisator fungiert, der eine gute Isolationsfähigkeit und hohe Stabilität der Schaumstruktur gewährleistet und somit maßgeblich zum Brandschutzeffekt beiträgt, wobei das zugesetzte Aluminiumhydroxid als Flammschutzmittel wirkt. Insbesondere dadurch, dass Blähgraphit für die Zusammensetzung des Intumeszenzmittels erforderlich ist, werden der Aufwand und die Kosten für dessen Herstellung erhöht.

Ferner ist aus Druckschrift RU 2 666 861 C2 eine feuerhemmende Lackzusammensetzung bekannt, die Melamin, Pentaerythrit, Ammoniumpolyphosphat, Chlorparaffin, Styrol-Acryl-Copolymer, Titandioxidpigment sowie Testbenzin als Verdünner umfasst, wobei als Lösungsmittel Butylacetat oder Xylol verwendet wird. Druckschrift CN 104 559 489 A offenbart eine feuerhemmende Lackzusammensetzung aus Melamin, Tetramethylolmethan, Ammoniumpolyphosphat, Chlorparaffin, einen Filmbildner, der u.a. Acrylcopolymer beinhaltet, Titandioxid, Testbenzin (No. 200 industrial naptha) und einem Lösungsmittel, wobei als Lösungsmittel eine Mischung aus Dimethylbenzol und N-Butylacetat verwendbar ist. Die Druckschrift CN 1 488 692 A beschreibt einen feuerhemmenden Lack aus Cyanuramid, Pentaerythrit, Ammoniumpolyphosphat, Chlorparaffin, modifiziertem Acrylharz, Titandioxid sowie Testbenzin, wobei ferner Zinkborat enthalten ist. Die Druckschrift CN 109 233 498 A beschreibt darüber hinaus eine herkömmliche Zusammensetzung für den Brandschutz aus Melamin, Dipentaerythritol, Ammoniumpolyphosphat, Chlorparaffin, filmbildendem Polymer, welches ein Styrol-modifiziertes Acrylatharz beinhaltet, einem Füllstoff umfassend Titandioxid, Dispergiermittel, Verdickungsmittel, sowie Xylol und/ oder Methylethylketon als Lösungsmittel.

### OFFENBARUNG DER ERFINDUNG

### AUFGABE DER ERFINDUNG

Die Aufgabe der vorliegenden Erfindung besteht darin, eine feuerhemmende Lackfarbe zu schaffen, die ein Intumeszenzmittel enthält und gut als Beschichtungsmaterial für den Brandschutz von Metallkonstruktionen geeignet ist und welche einfach und kostengünstig herstellbar ist.

### TECHNISCHE LÖSUNG

Diese Aufgabe wird durch einen feuerhemmenden Lack mit den Merkmalen des Anspruchs 1, die Verwendung des Lacks gemäß Anspruch 3 und ein Verfahren mit den Merkmalen des Anspruchs 4 gelöst. Vorteilhafte Ausgestaltungen sind Gegenstand der abhängigen Ansprüche.

Die Erfindung schlägt einen feuerhemmenden Lack vor, der ein Intumeszenzmittel enthält, wobei das Intumeszenzmittel eine Mischung aus mindestens einem Polyol, mindestens einem Cyanursäurederivat und Ammoniumpolyphosphat umfasst und sich insbesondere aus einer Mischung aus Pentaerythrit, Melamin und Ammoniumpolyphosphat zusammensetzt, wobei der feuerhemmende Lack ferner Chlorparaffin beinhaltet und wobei das Intumeszenzmittel und das Chlorparaffin homogen in einem Trägermaterial verteilt sind. Das Trägermaterial ist ein in einem Lösungsmittel gelöstes Harz.

Der feuerhemmende Lack umfasst ferner wenigstens einen Zusatzstoff, der wahlweise ein Dispergiermittel, ein rheologisches Additiv, ein Füllstoff oder eine Kombination daraus sein kann.

Insbesondere die Zugabe eines rheologischen Additivs ist vorteilhaft, da dieses eine Verbesserung der Lagerstabilität und eine höhere Beständigkeit gegen ein Absacken (pigmentstabilisierende Eigenschaft) für den erfindungsgemäßen Lack bewirkt.

Das als Trägermaterial verwendete in einem Lösungsmittel gelöste Harz kann ein Acrylharz sein. Das Lösungsmittel kann Testbenzin sein.

Vorzugsweise kann der feuerhemmende Lack außerdem Titandioxid als Füllstoff enthalten.

Gemäß der vorliegenden Erfindung setzt sich der feuerhemmende Lack aus 11 Gew.- % Melamin, 10 Gew.-% Pentaerythrit, 22 Gew.-% Ammoniumpolyphosphat, 4,4 Gew.- % Chlorparaffin, 20 Gew.-% Acrylharz, 4 Gew.-% Titandioxid, 0,4 Gew.-% eines geeigneten Dispergiermittels, 0 bis 1,0 Gew.-% eines geeigneten rheologischen Additivs und 27,2 bis 28,2 Gew.-% Testbenzin zusammen. Vorzugsweise beträgt der Anteil des rheologischen Additivs 0,7 Gew.-%.

Der erfindungsgemäße feuerhemmende Lack eignet sich im Speziellen zur Beschichtung von metallischen Oberflächen.

Des Weiteren schlägt die Erfindung ein entsprechendes Verfahren zur Herstellung eines feuerhemmenden Lackes für den Brandschutz von Metallkonstruktionen vor, bei welchem zuerst eine Arbeitslösung durch Lösen eines rheologischen Additivs in einem Lösungsmittel hergestellt wird, wobei in einer Ausführungsform der Erfindung das Lösungsmittel Testbenzin sein kann, wobei danach die Aufnahme eines Dispergiermittels (üblicherweise unter weiterer Lösungsmittelzugabe) in der Arbeitslösung erfolgt, um eine dispergiermittelhaltige Arbeitslösung zu erhalten, welcher danach eine vorgegebene Menge von Chlorparaffin sowie vorgegebene Mengen von gewählten Zusätzen, insbesondere eines Füllstoffs zugesetzt werden, wobei der Füllstoff Titandioxid sein kann. Dabei wird eine erste Vorläuferlösung erhalten. Zu dieser wird dann eine Intumeszenzmittellösung zugegeben, die Pentaerythrit, Melamin und Ammoniumpolyphosphat in einem Lösungsmittel umfasst, sodass eine zweite Vorläuferlösung erhalten wird. Darüber hinaus wird ein Harz in einem Lösungsmittel gelöst, um eine Harzlösung zu erhalten, wobei das Lösungsmittel vorzugsweise Testbenzin und das gelöste Harz ein Acrylharz ist. Die zweite Vorläuferlösung wird in die Harzlösung eingebracht, um eine Mischungslösung zu erzeugen, wobei abschließend durch gründliches Mischen der Mischungslösung eine homogene Verteilung der Bestandteile im Lösungsmittel erfolgt, um den erfindungsgemäßen feuerhemmenden Lack zu erhalten. Erfindungsgemäß werden folgende Mengen der Bestandteile eingesetzt: 11 Gew.-% Melamin, 10 Gew.-% Pentaerythrit, 22 Gew.-% Ammoniumpolyphosphat, 4,4 Gew.-% Chlorparaffin, 20 Gew.-% Acrylharz, 4 Gew.-% Titandioxid, 0,4 Gew.-% eines Dispergiermittels, 0 bis 1,0 Gew.-% eines geeigneten rheologischen Additivs und 27,2 bis 28,2 Gew.-% Testbenzin. Vorzugsweise beträgt der Anteil des rheologischen Additivs 0,7 Gew.-%.

Das abschließende Mischen kann mit einem Rührwerk bei einer Drehzahl zwischen 500 und 3000 U/min erfolgen, wobei die Mischdauer zwischen 0,25 und 2 Stunden betragen kann. In einer Ausführungsform der Erfindung kann die Drehzahl 1400 U/min und die Mischdauer 1 Stunde betragen.

Zusammenfassend stellt die vorliegende Erfindung somit einen feuerhemmenden Lack bereit, der einfach und kostengünstig herstellbar ist und eine gute Brandschutzwirkung, insbesondere für metallische Oberflächen, gewährleisten kann.

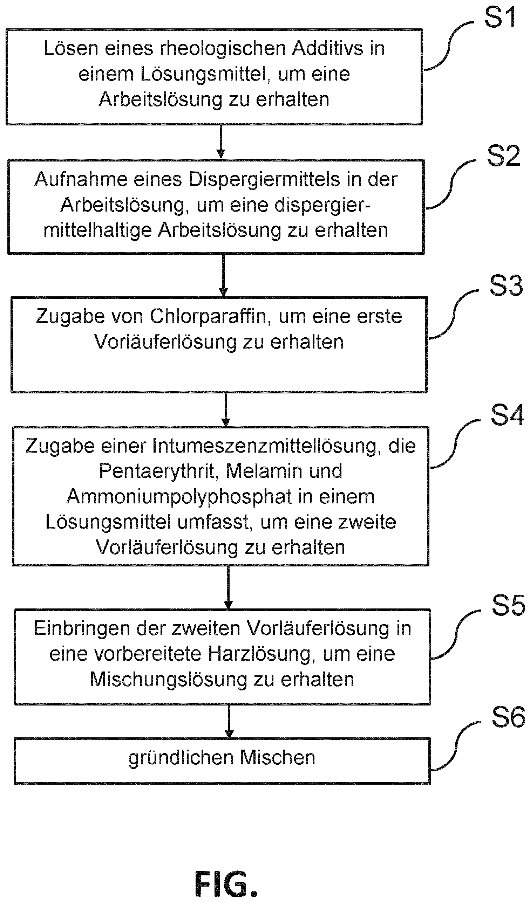

Weitere Ziele, Vorteile und Funktionen der vorliegenden Erfindung werden anhand der nachfolgenden Beschreibung unter Zuhilfenahme der beigefügten Zeichnung ersichtlich.

### KURZE BESCHREIBUNG DER ZEICHNUNG

Die einzige beigefügte Figur zeigt in rein schematischer Weise ein Flussdiagramm eines Herstellungsverfahrens für einen feuerhemmenden Lack gemäß der vorliegenden Erfindung.

### AUSFÜHRLICHE BESCHREIBUNG DER ERFINDUNG

Weitere Vorteile, Kennzeichen und Merkmale der vorliegenden Erfindung werden bei der nachfolgenden detaillierten Darstellung der bevorzugten Ausführungsbeispiele deutlich, wobei die Erfindung nicht auf diese Ausführungsbeispiele beschränkt ist.

Lacke sind wohlbekannte Stoffe, die zur Beschichtung von Oberflächen eingesetzt werden und sich üblicherweise aus flüchtigen Lösemitteln und nicht-flüchtigen, filmbildenden Komponenten, wie Bindemitteln (z.B. Harze), Füllstoffen, Pigmenten und/ oder anderen Additiven zur Bereitstellung einer bestimmten Funktion, zusammensetzen. Da Lacke üblicherweise Pigmente oder andere farbgebende Mittel beinhalten, spricht man häufig auch von Lackfarben. Im alltäglichen Sprachgebrauch (insbesondere bei Nicht-Fachleuten) ist häufig auch umgangssprachlich ganz allgemein von einer "Farbe" die Rede. In der vorliegenden Anmeldung sind daher die Begriffe "Lack" bzw. "Farbe" austauschbar und definieren wohlbekannte Materialien, die sich zur Bildung einer Oberflächenbeschichtung eignen.

Ferner sei darauf hingewiesen, dass in der vorliegenden Anmeldung der Begriff "feuerhemmend" die feuerfeste / feuerbeständige Eigenschaft des erfindungsgemäßen Lacks bezeichnet.

Erfindungsgemäß enthält der hierin vorgeschlagene feuerhemmende Lack ein Intumeszenzmittel, welches eine schäumende feuerhemmende Wirkung im Brandfall bereitstellt, wobei es sich bei dem Intumeszenzmittel um eine Mischung aus Pentaerythrit, Melamin und Ammoniumpolyphosphat handelt. Darüber hinaus enthält der erfindungsgemäße feuerhemmende Lack außerdem Chlorparaffin. Chlorparaffin ist eine Substanz, die bekanntermaßen als Bindemittel in Farben aber auch als Flammschutzmittel eingesetzt werden kann. Durch die Flammschutzwirkung von Chlorparaffin werden die Brandschutzeigenschaften des hierin vorgeschlagenen feuerhemmenden Lacks weiter verbessert. Bei dem erfindungsgemäßen feuerhemmenden Lack sind das Intumeszenzmittel und das Chlorparaffin homogen in einem Trägermaterial verteilt, wobei das Trägermaterial ein in einem Lösungsmittel gelöstes Harz ist.

Im Allgemeinen ist für das Trägermaterial die Verwendung von verschiedenen Lösungsmitteln und Harzkomponenten denkbar, welche bekanntermaßen in der Lackherstellung gebräuchlich sind. In einer bevorzugten Ausführungsform der Erfindung ist das in dem feuerhemmenden Lack als Trägermaterial verwendete Harz ein Acrylharz und als Lösungsmittel wird Testbenzin verwendet. Testbenzin, welches auch häufig als *Terpentinersatz*, *White Spirit* oder *Terpentinölersatz* bezeichnet wird, ist eine bekannte Komponente, die als Lösungsmittel für Lacke verwendbar ist.

Vorzugsweise beinhaltet der erfindungsgemäße feuerhemmende Lack außerdem wenigstens einen Zusatzstoff, wobei der wenigstens eine Zusatzstoff ein Dispergiermittel, ein rheologisches Additiv oder ein Füllstoff oder eine Kombination davon ist. In einer bevorzugten Ausführungsform der Erfindung enthält der feuerhemmende Lack beispielsweise Titandioxid, wobei Titandioxid ein wohlbekanntes Pigmentmaterial ist.

Darüber hinaus bevorzugt ist die Verwendung eines rheologischen Additivs als Zusatzstoff, um dadurch die Lagerstabilität zu verbessern und die Beständigkeit gegen ein Absetzen der festen Bestandteile zu erhöhen. Das rheologische Additiv hat ferner verdickende Eigenschaften. Rheologische Additive sind wohlbekannte Zusatzstoffe und können beispielsweise auf Polyacrylatbasis gefertigt sein.

In einem bevorzugten Ausführungsbeispiel der Erfindung setzt sich der feuerhemmende Lack folgendermaßen zusammen:
ein Intumeszenzmittel bestehend aus 11 Gew.-% Melamin, 10 Gew.-% Pentaerythrit und 22 Gew.-% Ammoniumpolyphosphat,
4,4 Gew.-% Chlorparaffin als Flammschzutzmittel,
27,2 bis 28,2 Gew.-% Testbenzin als Lösungsmittel,
20 Gew.-% Acrylharz als Lackbindemittel, und
4 Gew.-% Titandioxid (Pigment) sowie 0,4 Gew.-% eines Dispergiermittels und bis zu 1,0 Gew.-% eines rheologischen Additivs als Zusätze, wobei vorzugsweise das rheologische Additiv in einem Anteil von 0,7 Gew.-% vorliegt.

Der erfindungsgemäße Lack ist für den Brandschutz von Metallkonstruktionen konzipiert und bietet eine Feuerwiderstandsgrenze von bis zu 90 min. Des Weiteren eignet sich der erfindungsgemäße Lack auch für Räume, in denen eine hohe Luftfeuchtigkeit herrscht. Die Zusammensetzung des erfindungsgemäßen Lacks ist so ausgelegt, dass dessen feuerhemmende Wirkung (abhängig von den Einsatzbedingungen) für mindestens eine Dauer von 7 - 8 Jahren erhalten bleibt, d.h. zur Gewährleistung der feuerhemmenden Wirkung sollte eine Lackschicht spätestens nach Ablauf dieser Zeitdauer erneuert werden.

Ferner sei angemerkt, dass der erfindungsgemäße Lack auch in verdünnter Form, wenn die Farbverdünnung bis zu 5 - 7 % der Gesammtmasse beträgt, weiterhin seine feuerhemmende Wirkung aufweist.

Gemäß den vorstehenden Ausführungen besteht eine bevorzugte Anwendung des erfindungsgemäßen feuerhemmenden Lacks darin, diesen zur Beschichtung von metallischen Oberflächen zu verwenden, um einen Brandschutzeffekt für Metallkonstruktionen bereitzustellen.

Bezugnehmend auf die beigefügte Figur wird nachfolgend ein erfindungsgemäßes Verfahren zur Herstellung eines feuerhemmenden Lackes für den Brandschutz von Metallkonstruktionen beschrieben, durch welches ein feuerhemmender Lack mit den vorstehenden Eigenschaften in einem einfachen Prozess gefertigt und somit kostengünstig bereitgestellt werden kann.

S1: Zu Beginn des Verfahrens wird eine Arbeitslösung hergestellt, indem ein rheologisches Additiv in einem Lösungsmittel gelöst wird. Zum vollständigen Lösen des Additivs in dem Lösungsmittel wird die Mischung beispielsweise mindestens 5 bis 7 Minuten lang durchgeknetet. Erfindungsgemäß soll als Lösungsmittel Testbenzin eingesetzt werden, wobei die zum Lösen des rheologischen Additivs verwendete Menge an Testbenzin 15% der Gesamtmasse von Testbenzin betragen kann.

S2: Zu der im Schritt S1 hergestellten Lösung wird weiteres Lösungsmittel hinzugefügt (beispielsweise eine Menge, die 50 Gewichts-% der Gesamtmasse von Testbenzin beträgt), wobei danach eine geeignete Menge eines Dispergiermittels zugesetzt wird. Wie vorstehend erwähnt ist, soll als Lösungsmittel Testbenzin eingesetzt werden. Es sei jedoch angemerkt, dass ohne Weiteres auch Modifikationen denkbar sind, in denen alternativ ein anderes beliebiges Lösungsmittel verwendet wird, welches bekanntermaßen für die Anwendung in Lacken geeignet ist.

S3: Dem im Schritt S2 hergestellten System wird zumindest eine vorbestimmte Menge an Chlorparaffin zugesetzt und ein Mischen durchgeführt. Vorzugsweise erfolgt das Mischen für 7 bis 8 Minuten. Bei Bedarf können in diesem Schritt noch Zusatzstoffe hinzugefügt werden. Im Schritt S3 wird eine erste Vorläuferlösung erhalten.

S4: Der im Schritt S3 erhaltenen ersten Vorläuferlösung wird eine Intumeszenzmittellösung zugesetzt. Für die Intumeszenzmittellösung wurden Pentaerythrit, Melamin und Ammoniumpolyphosphat in einem Lösungsmittel aufgenommen und darin gelöst. Darüber hinaus werden in dieser Phase verschiedene handelsübliche Zusatzstoffe zugesetzt. Gemäß der vorliegenden Erfindung wird in diesem Schritt zumindest ein Dispergiermittel und ein Füllstoff bzw. Pigmentmaterial zugesetzt, wobei der Füllstoff Titandioxid ist. Insgesamt wird dadurch eine zweite Vorläuferlösung erhalten. Es sei angemerkt, dass ohne Weiteres auch Modifikationen denkbar sind, in denen alternativ ein anderer Füllstoff verwendet wird, der für die Anwendung in Lacken geeignet ist.

Nach Schritt S4 oder parallel zu wenigstens einem der vorhergehenden Schritte wird außerdem eine Harzlösung hergestellt, welche aus einem in einem Lösungsmittel gelösten Harz besteht. Gemäß der vorliegenden Erfindung ist das Lösungsmittel der Harzlösung Testbenzin und das darin gelöste Harz ist ein Acrylharz. Zur Herstellung der Harzlösung kann das Acrylharz zu einer vorgegebenen Menge an Testbenzin (z.B. 35% der Gesamtmenge an Testbenzin) gegeben und damit vermengt werden. Es sei jedoch angemerkt, dass ohne Weiteres auch Modifikationen denkbar sind, in denen alternativ ein anderes Lösungsmittel und/ oder Harz verwendet wird, welche für die Anwendung in Lacken geeignet sind.

S5: Die zweite Vorläuferlösung wird in die Harzlösung eingebracht, um eine Mischungslösung zu erhalten.

S6: Abschließend erfolgt ein Mischvorgang, bei dem die Mischungslösung gründlich durchgemischt wird, sodass eine homogene Verteilung der enthaltenen Bestandteile erreicht wird, um einen feuerhemmenden Lack gemäß der vorliegenden Erfindung zu erhalten.

In einer bevorzugten Ausführungsform der Erfindung wird das gründliche Mischen der Mischungslösung im Schritt S4 mittels eines Rührwerks realisiert, wobei eine Drehzahl zwischen 500 und 3000 U/min angewendet wird und eine Durchmischungsdauer (zur Homogenisierung) zwischen 0,25 und 2 Stunden beträgt.

Besonders bevorzugt ist die Anwendung einer Drehzahl von 1400 U/min für eine Mischdauer von 1 Stunde.

Es sei angemerkt, dass der feuerhemmende Lack demzufolge einfach und kostengünstig herstellbar ist.

Eine wirksame Beschichtung für den Brandschutz von Metallkonstruktionen kann im Speziellen durch einen nach dem vorstehenden Verfahren hergestellten feuerhemmenden Lack erreicht werden, wenn in der Herstellung folgende Mengen der Bestandteile eingesetzt werden: 11 Gew.-% Melamin, 10 Gew.-% Pentaerythrit, 22 Gew.-% Ammoniumpolyphosphat, 4,4 Gew.-% Chlorparaffin, 20 Gew.-% Acrylharz, 4 Gew.-% Titandioxid, 0,4 Gew.-% eines Dispergiermittels, 0 bis 1,0 Gew.-% eines geeigneten rheologischen Additivs und 27, 2 bis 28,2 Gew.-% Testbenzin.Vorzugsweise beträgt der Anteil des rheologischen Additivs 0,7 Gew.-%

Obwohl zahlreiche Eigenschaften und Vorteile der vorliegenden Erfindung in der vorhergehenden Beschreibung dargelegt wurden, dient die Beschreibung lediglich zur Veranschaulichung. Abwandlungen durch Weglassen einzelner Merkmale oder unterschiedliche Kombination der vorgestellten Einzelmerkmale gehören zur Erfindung, solange der Schutzbereich der beigefügten Ansprüche nicht verlassen wird.

### BEZUGSZEICHENLISTE

- S1: Schritt zum Lösen eines rheologischen Additivs in einem Lösungsmittel, um eine Arbeitslösung zu erhalten
- S2: Schritt zur Aufnahme eines Dispergiermittels in der Arbeitslösung, um eine dispergiermittelhaltige Arbeitslösung zu erhalten
- S3: Schritt zur Zugabe von Chlorparaffin, um eine erste Vorläuferlösung zu erhalten
- S4: Schritt zur Zugabe einer Intumeszenzmittellösung, die Pentaerythrit, Melamin und Ammoniumpolyphosphat in einem Lösungsmittel umfasst, um eine zweite Vorläuferlösung zu erhalten
- S5: Schritt zum Einbringen der zweiten Vorläuferlösung in eine vorbereitete Harzlösung, um eine Mischungslösung zu erhalten
- S6: Schritt zum gründlichen Mischen

## Patentansprüche

1. Feuerhemmender Lack, welcher ein Intumeszenzmittel enthält, wobei das Intumeszenzmittel eine Mischung aus mindestens einem Polyol, mindestens einem Cyanursäurederivat und Ammoniumpolyphosphat umfasst, wobei der feuerhemmende Lack ferner Chlorparaffin beinhaltet, wobei das Intumeszenzmittel und das Chlorparaffin homogen in einem Trägermaterial verteilt sind und wobei das Trägermaterial ein in einem Lösungsmittel gelöstes Harz ist; wobei das Polyol Pentaerythrit ist und das Cyanursäurederivat Melamin ist, wobei der feuerhemmende Lack ferner wenigstens einen Zusatzstoff umfasst, wobei der wenigstens eine Zusatzsstoff ein Dispergiermittel, ein rheologisches Additiv, ein Füllstoff oder eine Kombination daraus ist,
**dadurch gekennzeichnet, dass**
sich der feuerhemmende Lack aus 11 Gew.-% Melamin, 10 Gew.-% Pentaerythrit, 22 Gew.-% Ammoniumpolyphosphat, 4,4 Gew.-% Chlorparaffin, 20 Gew.-% Acrylharz, 4 Gew.-% Titandioxid als Füllstoff, 0 bis 0,1 Gew.-% eines rheologischen Additivs, 0,4 Gew.-% eines Dispergiermittels und 27,2 bis 28,2 Gew.-% Testbenzin zusammensetzt.

2. Feuerhemmender Lack nach Anspruch 1,
**dadurch gekennzeichnet, dass**
der Gehalt des rheologischen Additivs 0,7 Gew.-% beträgt.

3. Verwendung des feuerhemmende Lacks nach einem der Ansprüche 1 oder 2 zur Beschichtung von metallischen Oberflächen.

4. Verfahren zur Herstellung eines feuerhemmenden Lackes nach einem der Ansprüche 1 oder 2 für den Brandschutz von Metallkonstruktionen, welches folgende Schritte, insbesondere in der angegebenen Reihenfolge umfasst:
Lösen von mindestens einem rheologischen Additiv in einem Lösungsmittel (S1), um eine Arbeitslösung zu erhalten;
Aufnahme eines Dispergiermittels in der Arbeitslösung (S2), um eine dispergiermittelhaltige Arbeitslösung zu erhalten;
Zugabe von Chlorparaffin zu der dispergiermittelhaltige Arbeitslösung (S3), um eine erste Vorläuferlösung zu erhalten;
Zugabe einer Intumeszenzmittellösung, die mindestens ein Polyol, insbesondere Pentaerythrit, mindestens ein Cyanursäurederivat, insbesondere Melamin, und Ammoniumpolyphosphat in einem Lösungsmittel umfasst, um eine zweite Vorläuferlösung zu erhalten (S4);
Lösen eines Harzes in einem Lösungsmittel, um eine Harzlösung zu erhalten; Einbringen der zweiten Vorläuferlösung in die Harzlösung, um eine Mischungslösung zu erhalten (S5); und
gründliches Mischen der Mischungslösung (S6), um einen feuerhemmenden Lack mit einer homogenen Verteilung der Bestandteile zu erhalten,
**dadurch gekennzeichnet, dass**
folgende Mengen der Bestandteile eingesetzt werden: 11 Gew.-% Melamin, 10 Gew.-% Pentaerythrit, 22 Gew.-% Ammoniumpolyphosphat, 4,4 Gew.-% Chlorparaffin, 20 Gew.-% Acrylharz, 4 Gew.-% Titandioxid, 0,4 Gew.-% eines Dispergiermittels, 0 bis 0,1 Gew.-% eines rheologischen Additivs und 27,2 bis 28,2 Gew.-% Testbenzin.

5. Verfahren nach Anspruch 4,
**dadurch gekennzeichnet, dass**
das gründliche Mischen (S6) mit einem Rührwerk bei einer Drehzahl zwischen 500 und 3000 U/min erfolgt, wobei die Mischdauer zwischen 0,25 und 2 Stunden beträgt.

6. Verfahren nach Anspruch 4,
**dadurch gekennzeichnet, dass**
die Drehzahl 1400 U/min und die Mischdauer 1 Stunde beträgt.

7. Verfahren nach Anspruch 4, wobei der Gehalt des rheologischen Additivs 0,7 Gew.-% beträgt.

## Claims

1. A fire-retardant paint containing an intumescent agent, wherein the intumescent agent comprises a mixture of at least one polyol, at least one cyanuric acid derivative and ammonium polyphosphate, wherein the fire-retardant paint further contains chlorinated paraffins, wherein the intumescent agent and the chlorinated paraffins are homogeneously distributed in a carrier material and wherein the carrier material is a resin dissolved in a solvent; wherein the polyol is pentaerythritol and the cyanuric acid derivative is melamine, wherein the fire-retardant paint further comprises at least one additive, wherein the at least one additive is a dispersant, a rheological additive, a filler or a combination thereof,
**characterised in that**
the fire-retardant paint is made up of 11% by weight melamine, 10% by weight pentaerythritol, 22% by weight ammonium polyphosphate, 4.4% by weight chlorinated paraffins, 20% by weight acrylic resin, 4% by weight titanium dioxide as filler, 0 to 0.1% by weight of a rheological additive, 0.4% by weight of a dispersant and 27.2 to 28.2% by weight of white spirit.

2. The fire-retardant paint according to claim 1,
**characterised in that**
the content of the rheological additive is 0.7% by weight.

3. Use of the fire-retardant paint according to any one of claims 1 or 2 for coating metallic surfaces.

4. A method for the production of a fire-retardant paint according to any one of claims 1 or 2 for fire protection of metal structures, which comprises the following steps, in particular in the order indicated:
dissolving at least one rheological additive in a solvent (S1) to obtain a working solution;
including a dispersant in the working solution (S2) to obtain a dispersant-containing working solution;
adding chlorinated paraffin to the dispersant-containing working solution (S3) to obtain a first precursor solution;
adding an intumescent solution comprising at least one polyol, in particular pentaerythritol, at least one cyanuric acid derivative, in particular melamine, and ammonium polyphosphate in a solvent to obtain a second precursor solution (S4); dissolving a resin in a solvent to obtain a resin solution;
introducing the second precursor solution into the resin solution to obtain a mixture solution (S5); and
thorough mixing of the mixture solution (S6) to obtain a fire-retardant paint with a homogeneous distribution of the components,
**characterised in that**
the following amounts of the components are used: 11% by weight melamine, 10% by weight pentaerythritol, 22% by weight ammonium polyphosphate, 4.4% by weight chlorinated paraffin, 20% by weight acrylic resin, 4% by weight titanium dioxide, 0.4% by weight of a dispersant, 0 to 0.1 % by weight of a rheological additive and 27.2 to 28.2% by weight of white spirit.

5. The method according to claim 4,
**characterised in that**
thoroughly mixing (S6) is carried out with an agitator at a rotational frequency between 500 and 3000 rpm, the mixing time being between 0.25 and 2 hours.

6. The method according to claim 4,
**characterised in that**
the rotational frequency is 1400 rpm and the mixing time is 1 hour.

7. The method according to claim 4, wherein the content of the rheological additive is 0.7% by weight.

## Revendications

1. Peinture ignifuge contenant un agent intumescent, dans laquelle l'agent intumescent comprend un mélange d'au moins un polyol, d'au moins un dérivé d'acide cyanurique et de polyphosphate d'ammonium, dans laquelle la peinture ignifuge contient en outre de la chloroparaffine, dans laquelle l'agent intumescent et la chloroparaffine sont répartis de manière homogène dans un matériau support et dans laquelle le matériau support est une résine dissoute dans un solvant ; dans laquelle le polyol est le pentaérythritol et le dérivé de l'acide cyanurique est la mélamine, dans laquelle la peinture ignifuge comprend en outre au moins un additif, dans laquelle le au moins un additif est un dispersant, un additif rhéologique, une charge ou une combinaison de ceux-ci,
**caractérisée en ce que**
la peinture ignifuge est composée de 11 % en poids de mélamine, 10 % en poids de pentaérythritol, 22 % en poids de polyphosphate d'ammonium, 4,4 % en poids de chloroparaffine, 20 % en poids de résine acrylique, 4 % en poids de dioxyde de titane comme charge, 0 à 0,1 % en poids d'un additif rhéologique, 0,4 % en poids d'un dispersant et 27,2 à 28,2 % en poids de white spirit.

2. Peinture ignifuge selon la revendication 1,
**caractérisée en ce que**
la teneur en additif rhéologique est de 0,7 % en poids.

3. Utilisation de la peinture ignifuge selon l'une quelconque des revendications 1 ou 2 pour revêtir des surfaces métalliques.

4. Procédé de fabrication d'une peinture ignifuge selon l'une quelconque des revendications 1 ou 2 pour la protection contre les incendies de structures métalliques, qui comprend les étapes suivantes, en particulier dans l'ordre indiqué :
dissoudre au moins un additif rhéologique dans un solvant (S1) pour obtenir une solution de travail ;
inclure un dispersant dans la solution de travail (S2) pour obtenir une solution de travail contenant un dispersant ;
ajouter de la paraffine chlorée à la solution de travail contenant un dispersant (S3) pour obtenir une première solution de précurseur ;
ajouter une solution intumescente comprenant au moins un polyol, en particulier le pentaérythritol, au moins un dérivé d'acide cyanurique, en particulier la mélamine, et du polyphosphate d'ammonium dans un solvant pour obtenir une seconde solution de précurseur (S4) ;
dissoudre une résine dans un solvant pour obtenir une solution de résine ;
introduire la seconde solution de précurseur dans la solution de résine pour obtenir une solution de mélange (S5) ; et
mélanger minutieusement la solution de mélange (S6) pour obtenir une peinture ignifuge avec une répartition homogène des composants,
**caractérisé en ce que**
les quantités suivantes des composants sont utilisées : 11 % en poids de mélamine,
10 % en poids de pentaérythritol, 22 % en poids de polyphosphate d'ammonium, 4,4 % en poids de paraffine chlorée, 20 % en poids de résine acrylique, 4 % en poids de dioxyde de titane, 0,4 % en poids d'un dispersant, 0 à 0,1 % en poids d'un additif rhéologique et 27,2 à 28,2 % en poids de white spirit.

5. Procédé selon la revendication 4,
**caractérisé en ce que**
un mélange minutieux (S6) est réalisé avec un agitateur à une fréquence de rotation comprise entre 500 et 3000 tr/min, le temps de mélange étant compris entre 0,25 et 2 heures.

6. Procédé selon la revendication 4,
**caractérisé en ce que**
la fréquence de rotation est de 1400 tr/min et le temps de mélange est de 1 heure.

7. Procédé selon la revendication 4, dans lequel la teneur en additif rhéologique est de 0,7 % en poids.
